## Europäisches Patentamt
## European Patent Office
## Office européen des brevets

(19)

(11) Veröffentlichungsnummer: **0 123 128**
**B1**

(12) # EUROPÄISCHE PATENTSCHRIFT

(45) Veröffentlichungstag der Patentschrift:
**15.11.89**

(51) Int. Cl.⁴: **G 01 P 3/486**

(21) Anmeldenummer: **84103018.2**

(22) Anmeldetag: **19.03.84**

(54) Optoelektronische Abtastanordnung.

(30) Priorität: **22.03.83 DE 3310394**

(43) Veröffentlichungstag der Anmeldung:
**31.10.84 Patentblatt 84/44**

(45) Bekanntmachung des Hinweises auf die Patenterteilung:
**15.11.89 Patentblatt 89/46**

(84) Benannte Vertragsstaaten:
**DE FR GB**

(56) Entgegenhaltungen:
**DE-A-2 254 253**
**DE-A-2 909 735**
**DE-C-760 288**
**GB-A-2 054 138**

(73) Patentinhaber: **Siemens Aktiengesellschaft, Wittelsbacherplatz 2, D-8000 München 2 (DE)**

(72) Erfinder: **Geyer, Jürgen, Ing.grad., Allinger Strasse 21, D-8039 Puchheim (DE)**
Erfinder: **Kegler, Ernst, Olivierstrasse 8, D-8000 München 71 (DE)**

EP 0 123 128 B1

**Beschreibung**

Die Erfindung betrifft eine optoelektronische Abtastanordnung gemäß dem Oberbegriff des Patentanspruches 1.

Es ist allgemein bekannt, optoelektronische Abtastanordnungen zur Überwachung von Bewegungsvorgängen zu verwenden. Die weiteren Ausführungen beschränken sich auf solche optoelektronischen Abtastanordnungen, bei denen das von einem Lichtsender abgegebene Licht von einer Reflektionsfläche reflektiert und in einem Lichtempfänger registriert wird. Meist sind hierbei der Lichtsender und der Lichtempfänger in einem Gehäuse untergebracht, und bilden eine sogenannte Reflexions-Lichtschranke.

Um einen sicheren Betrieb der Reflexions-Lichtschranke zu gewährleisten, muß diese zwei eindeutig unterscheidbare Signale abgeben. Ein erstes Signal zeigt an, daß in dem Lichtempfänger reflektiertes Licht registriert wird, also eine reflektierende Fläche vorhanden ist, ein zweites Signal zeigt an, daß kein reflektiertes Licht registriert wird, also keine reflektierende Fläche vorhanden ist.

Es ist denkbar, als reflektierende Fläche eine verspiegelte Fläche, und als nichtreflektierende Fläche eine Fläche aus lichtabsorbierendem Material zu verwenden. Es ist weiter bekannt, als nichtreflektierende Fläche einen tiefen Schlitz zu verwenden, der zudem noch mit lichtabsorbierendem Material ausgekleidet sein kann. Streulicht und eine Verschmutzung der reflektierenden Fläche verkleinern den Unterschied zwischen den beiden zugehörigen Signalen. Eine Verschmutzung der reflektierenden Fläche ergibt weniger Licht im Lichtempfänger und dadurch ein kleineres Signal. Streulicht ergibt trotz Abtastung der nichtreflektierenden Fläche mehr Licht im Lichtempfänger und damit ein größeres Signal. Weiter bewirkt eine verschmutzte, nichtreflektierende Fläche ebenfalls mehr Licht im Lichtempfänger und damit eine Störung des Signals.

Aus GB-A-2 054 138 ist ein Weglängensignalgeber für ein Kraftfahrzeug bekannt, der auf der Anwendung einer derartigen optoelektronischen Abtastanordnung beruht. Dazu ist eine drehende Welle als Weggeber vorgesehen, deren Rotation bewertet wird. Um dies zu erreichen, ist auf diese Welle ein Reflexionskörper von der Gestalt eines Kegelstumpfes aufgeschoben. Am Umfang dieses Kegelstumpfes sind in regelmäßigen Abständen aus der Kegelfläche vorspringende Nasen angeordnet, deren radiale Begrenzungsflächen auf einem konzentrisch zur Wellenachse angeordneten Zylindermantel liegen. Dieser Reflexionskörper besteht aus einem schwarz gefärbten Kunststoffmaterial, jedoch sind die Begrenzungsflächen verspiegelt.

In radialer Richtung ist diesem Reflexionskörper das eine Ende eines Lichtwellenleiters zugewandt, an dessen entferntem Ende dicht nebeneinander angeordnet ein Lichtsender und ein Lichtempfänger optisch angekoppelt sind.

Vom Lichtsender abgestrahltes Licht trifft während der Drehbewegung des Reflexionskörpers entweder auf die verspiegelte Begrenzungsfläche einer der Nasen und wird in den Empfänger reflektiert oder aber auf die nicht reflektierende Kegelstumpffläche. Die Oberflächeneigenschaft und die Geometrie dieser Fläche sind so gewählt, daß möglichst wenig Licht in den Lichtwellenleiter reflektiert wird.

Die in dem bekannten Weglängensignalgeber realisierte optoelektronische Abtastanordnung beruht wie bei allen konventionellen Reflexionslichtschranken darauf, daß in alternierender Reihenfolge Flächen mit hohem Reflexionsgrad bzw. Flächen mit möglichst niedrigem Reflexionsgrad in den Strahlengang eines abtastenden Lichtbündels gestellt werden. Der Störabstand des vom Lichtempfänger abgegebenen elektrischen Signales hängt also weitgehend davon ab, wie groß das Verhältnis der unterschiedlichen Reflexionsgrade ist. Bei der bekannten optoelektronischen Abtastanordnung wird dieser Kontrast durch die Flächengeometrie unterstützt.

Aus DE-A1-2 909 735 ist weiterhin ein optischer Impulsgeber für die Drehzahlüberwachung eines rotierenden Elementes unter Verwendung einer Reflexionslichtschranke bekannt. Mit dem rotierenden Element ist ein Reflektorelement verbunden, das periodisch einen vom Lichtsender der Reflexionslichtschranke abgegebenen Lichtstrahl in den Lichtempfänger reflektiert. Die Pulsfrequenz eines daraus abgeleiteten elektronischen Signales entspricht dabei der Drehzahl des rotierenden Elementes, das insbesondere auch eine Bandspule eines Tonbandgerätes sein kann. Das Reflektorelement weist in einer Ebene, die durch den vom Lichtsender ausgestrahlten und den in den Lichtempfänger reflektierten Lichtstrahl aufgespannt wird, eine gekrümmte, vorzugsweise parabolische, hyperbolische oder kreisförmige Teilfläche im Querschnitt auf. Nur wenn eine der gekrümmten Teilflächen in bezug auf die Reflexionslichtschranke entsprechend ausgerichtet ist, gelangt der einfallende Lichtstrahl nach zweifacher Reflexion an der gekrümmten Teilfläche in den Lichtempfänger. In allen anderen Winkelstellungen der gekrümmten Teilflächen bezüglich der Reflexionslichtschranke wird der reflektierte Lichtstrahl als Streulicht in irgendeine Richtung am Lichtempfänger vorbei in die Umgebung abgestrahlt. Nachteilig an dieser bekannten Lösung ist zum einen, daß die reflektierenden Teilflächen des auf einer Antriebsachse für die Magnetbandspule angeordneten Reflektorelementes verhältnismäßig kompliziert ausgestaltet sind, zum anderen bedarf es wegen der Symmetrie der zugrundegelegten doppelten Reflexion des abtastenden Lichtstrahles am Reflektorelement einer möglichst exakten Ausrichtung der Reflexionslichtschranke in bezug auf dieses Reflektorelement.

Der vorliegenden Erfindung liegt daher die Aufgabe zugrunde, für eine optoelektronische Abtastanordnung der eingangs genannten Art in Weiterbildung des genannten optischen Impulsgebers eine Lösung zu schaffen, die bei einer möglichst einfachen und damit kostengünstigen Ausgestaltung der Markierungen eine betriebssichere, d. h. auf einem hohen Signalkontrast beruhende und dennoch wartungsarme Drehzahlüberwachung ermöglicht. Diese Aufgabe wird erfindungsgemäß durch die im kennzeichnenden Teil des Patentanspruches 1 angegebenen Merkmale gelöst.

Bei der erfindungsgemäßen optoelektronischen Abtastanordnung ist das Reflektorelement in die Bordscheibe der Magnetbandspule integriert, indem die Markierungen radial auf ihrer Oberfläche angeordnet sind, d. h. im Betrieb wird unmittelbar die Bewegung der Bandspule selbst erfaßt. Dabei werden die Markierungen durch verspiegelte, im Schnitt plane Flächen gebildet, so daß sie kostengünstig herstellbar sind. Sie sind dabei dennoch so ausgestaltet, daß sich unter normalen Betriebsbedingungen ein hoher Signalkontrast auch dann ergibt, wenn die Markierungsflächen mit der Zeit verschmutzen und damit die absoluten Signalpegel absinken. Die erfindungsgemäße Lösung berücksichtigt, daß der vom Lichtsender abgestrahlte Lichtstrahl einen gewissen Öffnungswinkel aufweist, der sich bei der Reflexion an den Markierungsflächen noch vergrößert. Dennoch ist die geometrische Zuordnung der Reflexionslichtschranke zu den Markierungsflächen in bezug auf Justierungsfehler relativ unkritisch.

Im Unteranspruch ist eine vorteilhafte Ausgestaltung angegeben. Um den Einfluß von Fremdlicht zu vermeiden, ist dabei die Fläche der den Lichtstrahl in den Lichtempfänger nicht reflektierenden Markierung zur Nabe der Bordscheibe der Bandspule hin geneigt.

Im folgenden wird ein Ausführungsbeispiel für die optoelektronische Abtastanordnung anhand der Zeichnung näher erläutert. Dabei zeigt:

Fig. 1 eine Reflexions-Lichtschranke mit einer reflektierenden Markierung,
Fig. 2 und 3 jeweils eine Reflexions-Licht-schranke mit einer nichtreflektierenden Markie-rung,
Fig. 4 in Draufsicht die Rückseite einer Bordscheibe eines Festwickels und
Fig. 5 im Schnitt eine Bordscheibe eines Festwickels.

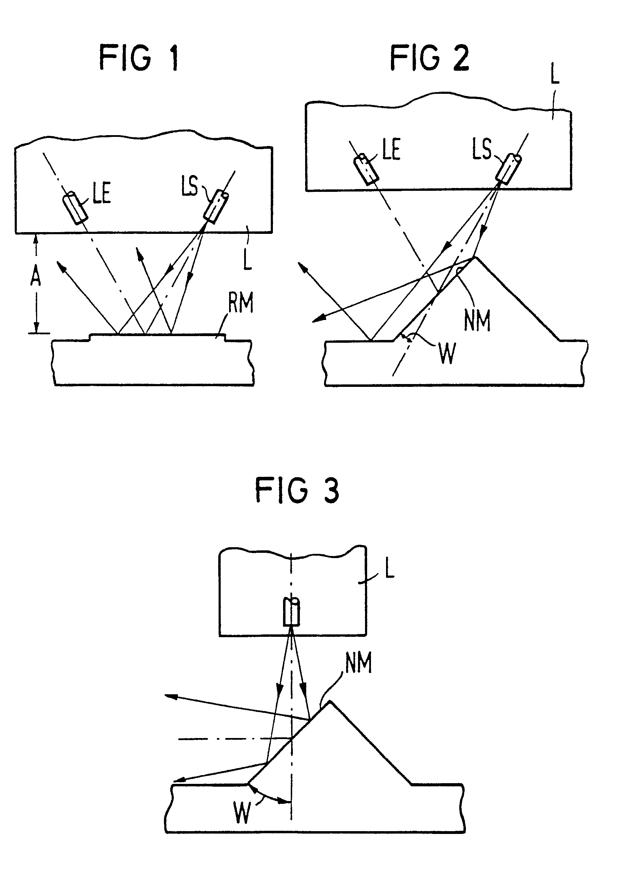

In den fig. 1 bis 3 ist eine optoelektronische Abtastanordnung dargestellt, die jeweils aus einer Reflexions-Lichtschranke L und einer reflektierenden Markierung RM (Fig. 1.) bzw. einer nichtreflektierenden Markierung NM (Fig. 2 und 3) besteht. Die Reflexions-Lichtschranke L besteht hierbei aus einem Lichtsender LS und einem Lichtempfänger LE, die gemeinsam in einem Gehäuse untergebracht sind. Unter einer nichtreflektierenden Markierung NM ist eine Fläche zu verstehen, durch die kein, vom Lichtsender LS abgegebenes Licht in den Lichtempfänger LE reflektiert wird.

Im folgenden wird davon ausgegangen, daß sich die reflektierende Markierung RM bzw. die nichtreflektierende Markeirung NM relativ zur Lichtschranke L bewegen. Die Bewegungsrichtung ist in den Fig. 1 bis 3 senkrecht zur Zeichenebene gewählt. In den Fig. 1 und 2 ist die Achse Lichtsender LS, Lichtempfänger LE, senkrecht zur Bewegungsrichtung, in der Fig. 3 ist die Achse Lichtsender LS, Lichtempfänger LE parallel zur Bewegungsrichtung angeordnet. Die Lichtschranke L ist in einem Abstand A zur reflektierenden Markierung RM angeordnet, der durch die geometrische Bauform der Lichtschranke L bestimmt ist, da das vom Lichtsender LS ausgesandte Licht (in den Fig. 1 bis 3 durch Pfeile dargestellt), unter Einhaltung des Re-flexionswinkels von der reflektierenden Markie-rung RM in den Lichtempfänger LE reflektiert wird. Die Fläche der reflektierenden Markierung RM ist, um den Reflexionsgrad zu erhöhen, verspiegelt.

Die nichtreflektierende Markierung NM (Fig. 2 und 3) ist eine verspiegelte Fläche, die um einen Winkel W gegen die Achse des vom Lichtsender LS ausgesandten Lichtbündels geneigt ist. Der Winkel W ist so gewählt, daß auch bei einer Divergenz der Lichtstrahlen kein vom Lichtsender LS kommendes Licht von der nichtreflektierenden Markierung NM in den Lichtempfänger LE reflektiert wird.

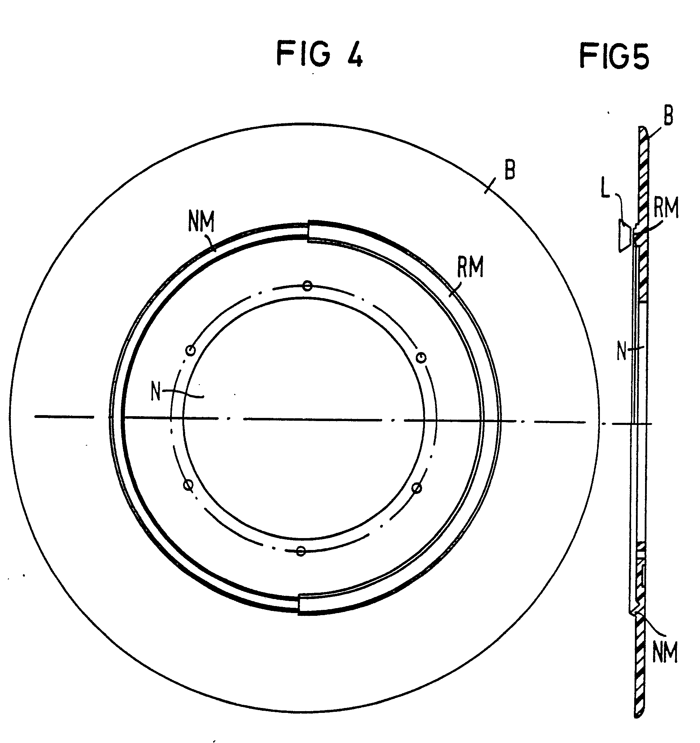

Die optoelektronische Abtastanordnung wird zur Überwachung der Drehung einer Bandspule, insbesondere des Festwickels in einem Magnetbandgerät verwendet. Der Festwickel besteht hierbei aus einer Nabe N und zwei Bordscheiben, wobei die dem Gerät zugewandte opak ausgebildet ist. In Fig. 4 ist in Draufsicht die Rückseite, und in Fig. 5 im Schnitt eine solche opake Bordscheibe B dargestellt. Radial sind auf einer Hälfte der Bordscheibe B die reflektierende Markierung RM, auf der anderen Hälfte die nichtreflektierende Markierung NM angeordnet. Weiter ist in Fig. 5 die abtastende Reflexions-Lichtschranke L dargestellt. Wie hier zu sehen ist, ist die Fläche der nichtreflektierende Markierung NM zur Nabe N hin geneigt, so daß die optoelektronische Abtastanordnung gegen von außen eindringendes Fremdlicht unempfindlich ist. Die nichtreflektierende Markierung NM bildet im Schnitt (Fig. 5) zusammen mit der Bordscheibe B ein dreieckförmiges Profil. Die Höhe dieses Profils kann umso kleiner sein, je kleiner die Divergenz des vom Lichtsender LS ausgesandten Lichtes ist, und je dichter die Reflexions-Lichtschranke L an der Bordscheibe B angebracht werden kann.

**Patentansprüche**

1. Optoelektronische Abtastanordnung zum Überwachen der Drehbewegung einer Bandspule mit einer Nabe (N) und zwei Bordscheiben in einem Magnetbandgerät mit einer aus einem Lichtsender (LS) und einem Lichtempfänger (LE) bestehenden Reflexionslichtschranke (L), mit einem auf der Bandspule angebrachten Reflektorelement, das reflektierende Markierungen (NM und RM) trägt, von denen bei einer Relativbewegung der Bandspule gegenüber der Reflexionslichtschranke (L) aufgrund ihrer geometrischen Form ein Teil (RM) einen vom Lichtsender (LS) abgegebenen Lichtstrahl in den Lichtempfänger (LE) reflektiert und ein Teil (NM) einen vom Lichtsender (LS) abgegebenen Lichtstrahl weg vom Lichtempfänger (LE) reflektiert, dadurch gekennzeichnet, daß die reflektierenden Markierungen als unmittelbar auf der dem Gerät zugewandten Bordscheibe (B) der Bandspule angeordnete Kreisringabschnitte ausgebildet sind, deren im Querschnitt plane und außerdem verspiegelte Oberflächen im Falle einer den Lichtstrahl in den Lichtempfänger reflektierenden Markierung (RM) zur Symmetrieebene zwischen Lichtsender (LS) und Lichtempfänger (LE) senkrecht stehen und im Falle einer den Lichtstrahl in den Lichtempfänger nicht reflektierenden Markierung (NM), um einen Winkel (W) von der Lichteinfallsrichtung abweichend, so ausgerichtet sind, daß das vom Lichtsender (LS) abgestrahlte Lichtbündel nicht in den Lichtempfänger (LE) reflektiert wird.

2. Optoelektronische Abtastanordnung gemäß Anspruch 1, dadurch gekennzeichnet, daß die nichtreflektierende Markierung (NM) im Schnitt zusammen mit der Bordscheibe (B) ein dreieckförmiges Profil bildet, wobei die nichtreflektierende Markierung (NM) zur Nabe (N) der Bordscheibe (B) hin geneigt ist.

**Claims**

1. Electrooptical sensor for monitoring the rotary movement of a tape spool having a hub (N) and two flange rings in a magnetic tape device having a reflection light barrier (L) comprising a light transmitter (LS) and a light receiver (LE), having a reflector element which is attached to the tape spool and bears reflecting markings (NM and RM) of which, in the case of a relative movement of the tape spool with respect to the reflection light barrier (L), by reason of its geometrical shape, one part (RM) reflects a light beam emitted by the light transmitter (LS) into the light receiver (LE) and one part (NM) reflects a light beam emitted by the light transmitter (LS) away from the light receiver (LE), characterized in that the reflecting markings are designed as circular ring portions which are arranged directly on the tape spool flange ring (B) facing the device and whose surfaces, which are plane in cross-section and are in addition mirror-coated, are perpendicular to the plane of symmetry between light transmitter (LS) and light receiver (LE) in the case of a marking (RM) which reflects the light beam into the light receiver, and are aligned in such a way, deviating by an angle (W) from the incidence of direction, in the case of a marking (NM) which does not reflect the light beam into the light receiver, that the light bundle emitted by the light transmitter (LS) is not reflected into the light receiver (LE).

2. Electrooptical sensor according to Claim 1, characterized in that the nonreflecting marking (NM) forms in cross-section a triangular profile together with the flange ring (B), the nonreflecting marking (NM) being inclined towards the hub (N) of the flange ring (B).

**Revendications**

1. Dispositif d'exploration optoélectronique servant à contrôler le mouvement de rotation d'une bobine de ruban comportant un moyeu (N) et deux disques marginaux dans un appareil à bande magnétique, comportant un relais photoélectrique à réflexion (L) constitué par un émetteur de lumière (LS) et un récepteur de lumière (LE), un élément réfléchissant placé sur la bobine de ruban et portant des marques réfléchissantes (NM et RM), dont une partie (RM) réfléchit vers le récepteur de lumière (LE) un faisceau de lumière émis par l'émetteur de lumière (LS) et dont une partie (NM) s'écarte par réflexion, du récepteur de lumière (LE), un faisceau de lumière envoyé par l'émetteur de lumière (LS), lors d'un déplacement relatif de la bobine de ruban par rapport au relais photoélectrique à réflexion (L), en raison de la forme géométrique de la bobine, caractérisé par le fait que les marques réfléchissantes sont réalisées sous la forme de sections d'anneau circulaire, qui sont disposées directement sur le disque marginal (B), tourné vers l'appareil, de la bobine de ruban et dont les surfaces, qui sont planes en coupe transversale et sont en outre métallisées, sont perpendiculaires au plan de symétrie entre l'émetteur de lumière (LS) et le récepteur de lumière (LE), dans le cas d'une marque (RM) réfléchissant le faisceau de lumière vers le récepteur de lumière, et sont alignées, dans le cas d'une marque (NM) qui ne réfléchit pas le faisceau de lumière sur le récepteur de lumière, en étant écartées d'un angle (W) par rapport à la direction d'incidence de la lumière, de telle sorte que le faisceau de lumière émis par l'émetteur de lumière (LS) n'est pas réfléchi vers le récepteur de lumière (LE).

2. Dispositif d'exploration optoélectronique selon la revendication 1, caractérisé en ce que la marque non réfléchissante (NM) forme en coupe, conjointement avec le disque marginal (B), un profil triangulaire, la marque non réfléchissante (NM) étant inclinée en direction du moyeu (N) du disque marginal (B).

# FIG 1

# FIG 2

# FIG 3

# FIG 4

# FIG5